# EUROPÄISCHE PATENTSCHRIFT

(11) **EP 0 885 760 B1**
(45) Veröffentlichungstag und Bekanntmachung des Hinweises auf die Patenterteilung: **26.02.2003**
(21) Anmeldenummer: 98107312.5
(22) Anmeldetag: 22.04.1998
(51) Int. Cl.: B60J 7/12

(54) **Verdeck für ein Cabriolet-Fahrzeug**
Convertible for motorvehicle
Capote pliante pour véhicule convertible

(30) Priorität: 19.06.1997 DE 29710720 U
(43) Veröffentlichungstag der Anmeldung: 23.12.1998
(73) Patentinhaber: Wilhelm Karmann GmbH, D-49084 Osnabrück (DE)
(72) Erfinder: Theuerkauf, Jürgen, D-49565 Bramsche (DE); Schröder, Burkhard, D-48336 Sassenberg (DE)
(74) Vertreter: Busse & Busse Patentanwälte

(56) Entgegenhaltungen:
- US-A- 4 720 134
- US-A- 4 958 882
- US-A- 5 004 291
- US-A- 5 161 852

## Beschreibung

Die Erfindung betrifft ein Verdeck für ein Cabriolet-Fahrzeug mit einer Klappgestänge-Baugruppe gemäß dem Oberbegriff des Anspruches 1.

Bei einem bekannten Faltverdeck dieser Art (DE 38 37 522 C2) wird ein in Schließstellung am Frontschreibenrahmen anliegendes Dachspitzenteil gemeinsam mit dieses abstützenden Gestängeschenkeln randseitiger Klappgestänge-Baugruppen in eine heckseitige Aufbewahrungslage verschwenkt, wobei beim Einschwenken des Verdeckes in ein heckseitiges Aufnahmefach jeweils zwei der Gestängeschenkel mittels einer Zugstange um vertikale Achsen nach außen verschwenkt werden. Diese konstruktiv aufwendige Zugstange ist nur während einer letzten Schwenkphase des Verdecks wirksam, so daß die Gestängeschenkel auf ihrer Bewegungsbahn im Bereich oberhalb des Fahrzeugfonds in bekannter Art parallel zur Fahrzeuglängsachse verlagert werden und dabei im Fondbereich des Fahrzeugs befindliche Passagiere durch eine kopfnahe Bewegung der Verdeckteile gefährdet sein können.

Die Erfindung befaßt sich mit dem Problem, ein Verdeck für ein Cabriolet-Fahrzeug zu schaffen, dessen Klappgestänge-Baugruppen mittels konstruktiv einfacher und raumsparend angeordneter Steuerbauteile gefährdungsfrei so verlagerbar sind, daß eine Beeinträchtigung der Passagiere beim Öffnungs- bzw. Schließvorgang weitgehend vermieden und der Komfort verbessert ist.

Ausgehend von einem Verdeck nach dem Oberbegriff des Anspruches 1 löst die Erfindung diese Aufgabe mit den Merkmalen des kennzeichnenden Teils des Anspruches 1. Hinsichtlich wesentlicher weiterer Ausgestaltungen wird auf die Ansprüche 2 bis 5 verwiesen.

Das erfindungsgemäße Faltverdeck ist mit Klappgestänge-Baugruppen versehen, die im Bereich ihrer die Gestängeschenkel verbindenden Gelenke jeweilige Spreizelemente aufweisen, die den Gestängeschenkeln bei Öffnungs- bzw. Schließbewegung bereits auf ihrer Bewegungsbahn oberhalb des Fondbereichs des Fahrzeugs eine nach außen gerichtete Querverschwenkung vermitteln. Damit ist eine Erweiterung der Kopffreiheit über dem Fondbereich des Fahrzeugs erreicht, bei der Verdeckhandhabung sind Gefährdungen der Passagiere weitgehend ausgeschlossen und in der Ablagestellung des Verdecks ist die Schulterweite im Rücksitzbereich vorteilhaft vergrößert.

In konstruktiv einfacher Ausführung sind ein zwischen den Gestängeschenkeln vorgesehenes Kugelgelenk und ein mit diesem zusammenwirkender Führungskeil an den abgewandten Ende eines der Gestängeschenkel als Spreizelemente in die Klappgestänge-Baugruppe integriert, so daß bei deren Bewegung eine permanente Zwangssteuerung zur Erzeugung der nach außen gerichteten Querverschwenkung erreicht ist. Mit diesen einfachen und kleinbauenden Bauteilen ist eine funktionssichere und langzeitstabile Bewegung der Verdeck-Baugruppe möglich, wobei die konstruktive Ausbildung der Gestängeschenkel weitgehend beliebig ist und diese an kundenspezifisch unterschiedliche Verdecklängen mit geringem Aufwand anpaßbar sind.

Die Querstabilität des Klappgestänges in dessen Öffnungs- bzw. Schließstellung kann zusätzlich dadurch verbessert werden, daß ein mit den Spreizelementen zusammenwirkendes Anlageteil im Bereich der Gelenke jeweilige Teile einer Führungsstreben-Konstruktion hintergreift und dieser damit eine das Verdeck insgesamt stabilisierende Klemmstellung vermittelt wird.

Weitere Einzelheiten und Vorteile der Erfindung ergeben sich aus der nachfolgenden Beschreibung und den Zeichnungen, die ein Ausführungsbeispiel eines erfindungsgemäßen Verdecks veranschaulichen. In der Zeichnungen zeigen:
- Fig. 1: eine perspektivische Heckansicht eines Faltverdecks mit beidseitigen Klappgestänge-Baugruppen ohne eine zwischen diesen vorgesehene Dachhaut,

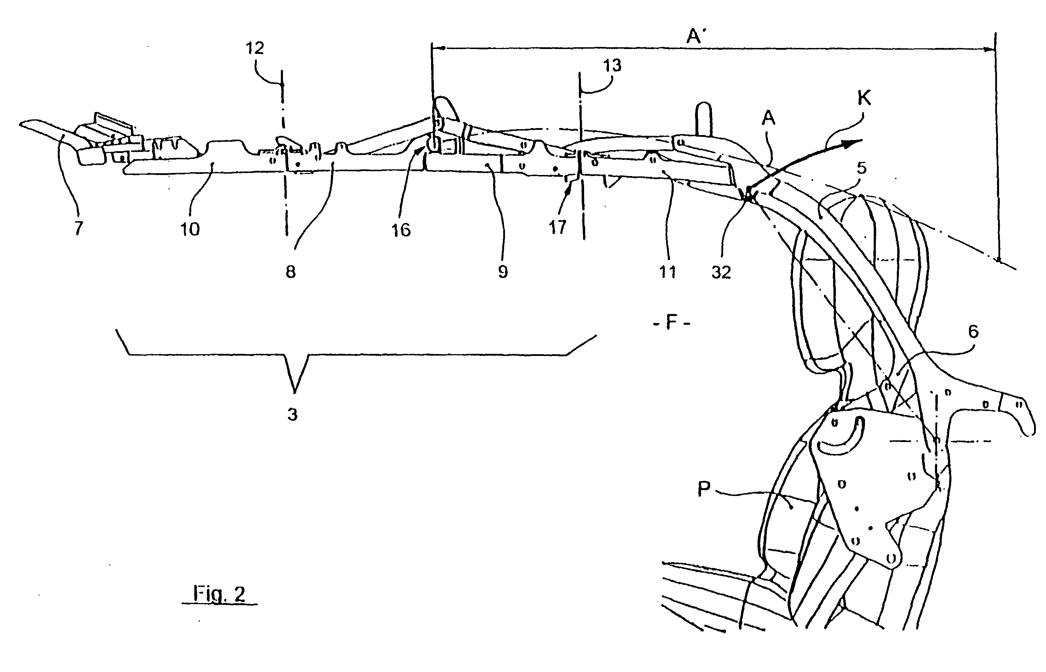

- Fig. 2: eine Seitenansicht des Verdecks gemäß Fig. 1 mit einer Prinzipdarstellung eines im Fahrzeug befindlichen Passagiers,
- Fig. 3: eine Prinzipdarstellung ähnlich Fig. 2 mit dem Verdeck in einer Schwenkstellung,
- Fig. 4: eine perspektivische Heckansicht mit dem Verdeck in der Schwenkstellung gemäß Fig. 3,
- Fig. 5: eine vergrößerte Ausschnittsdarstellung des Verdecks ähnlich Fig. 4 im Bereich der Gestängeschenkel,
- Fig. 6: eine Innenansicht des Verdecks im Bereich einer der Klappgestänge-Baugruppen in Öffnungsstellung,
- Fig. 7: eine Draufsicht auf das Verdeck in Öffnungsstellung gemäß Fig. 6 mit zwei im Fondbereich dargestellten Passagieren,
- Fig. 8: eine vergrößerte Ausschnittsdarstellung von zwei mittleren Gestängeschenkeln, die über jeweilige Spreizelemente zusammenwirken,
- Fig. 9: eine vergrößerte Ausschnittsdarstellung des als Führungskeil ausgebildeten Spreizelementes während einer Bewegungsphase des Verdeckes ähnlich Fig. 4,
- Fig. 10: eine Ausschnittsdarstellung ähnlich Fig. 9 mit dem Verdeck in Schließstellung, und
- Fig. 11: eine vergrößerte Ausschnittsdarstellung der Gestängeschenkel im Bereich des vorderen Gelenkes mit einem inneren Anlagewinkelteil.

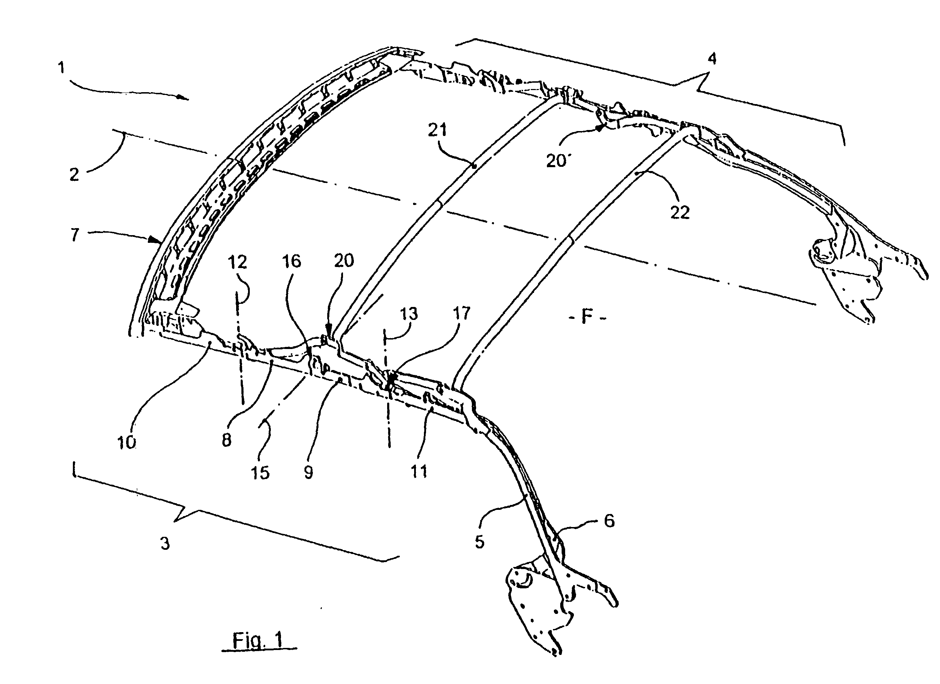

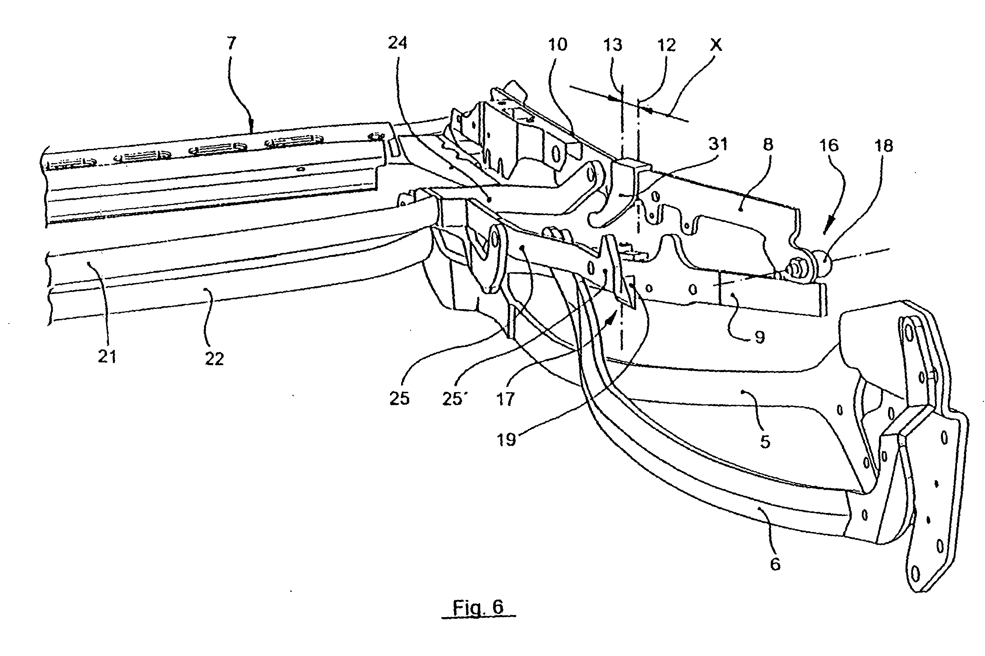

In Fig. 1 ist ein insgesamt mit 1 bezeichnetes Verdeck für ein Cabriolet-Fahrzeug veranschaulicht, dessen nicht näher dargestellte Dachhaut mit symmetrisch zur Fahrzeuglängsmittelebene 2 verlaufenden Klappgestänge-Baugruppen 3, 4 versehen ist, mittels deren heckseitig angetriebener Hauptsäule 5 und Hauptführungsstange 6 ein in der dargestellten Schließstellung an einem Frontscheibenrahmen (nicht dargestellt) anliegendes Dachspitzenteil 7 gemeinsam mit mehreren in einer Hintereinanderanordnung gleichebenig verbundenen Gestängeschenkeln verschwenkbar und in eine heckseitige Aufbewahrungslage (Fig. 6) überführbar ist.

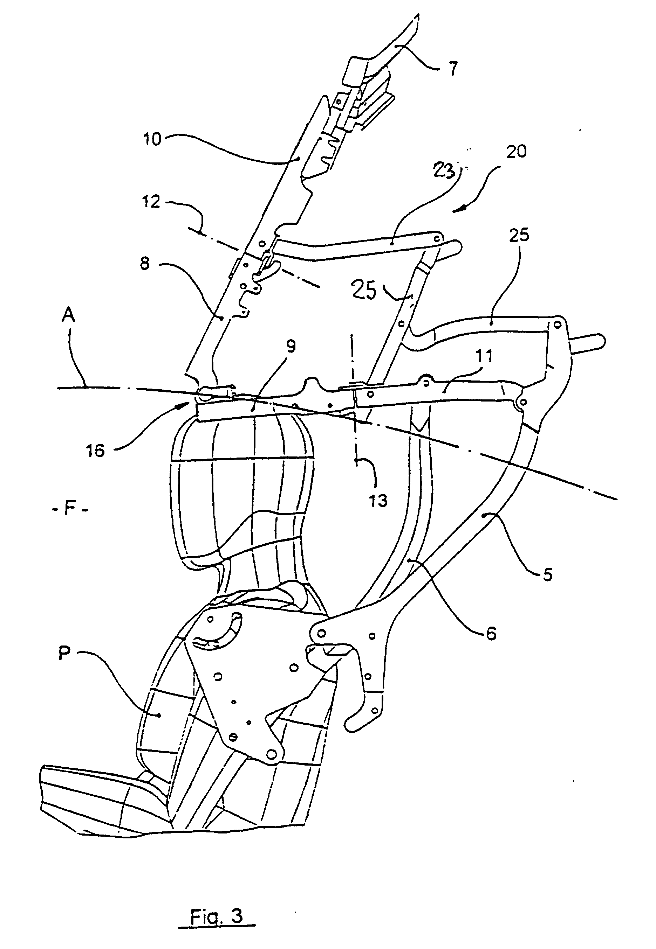

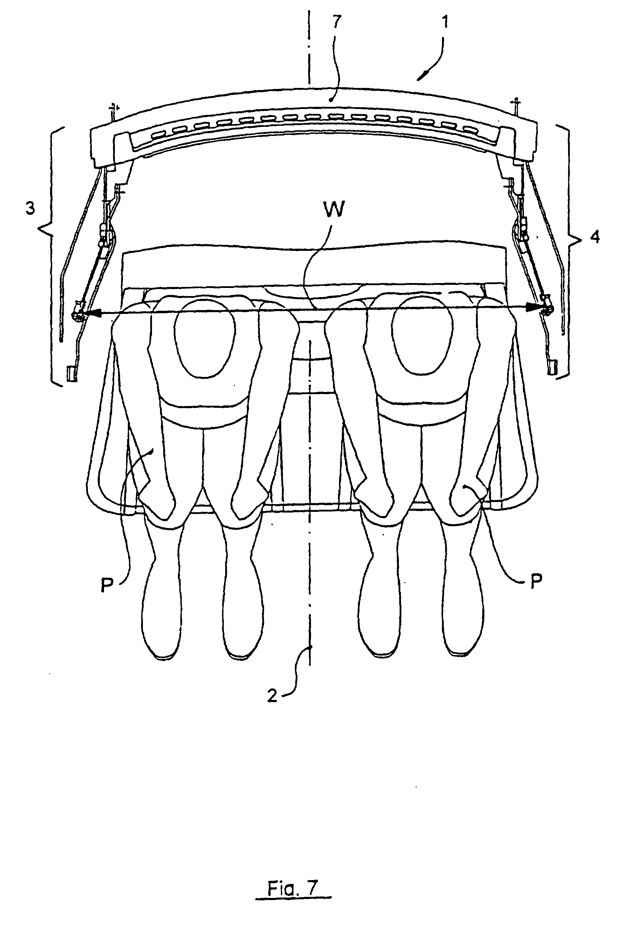

Ausgehend von der Hauptsäule 5 sind ein hinterer Stützschenkel 11, ein vorderer Stützschenkel 10 und zwei mittlere Gestängeschenkel 8 und 9 vorgesehen, die jeweilige Gelenke mit in Schließstellung vertikalen Achsen 12, 13 aufweisen, um die die Gestängeschenkel 8, 9 in ihrer Aufbewahrungslage (Fig. 6, Fig. 7) nach außen verschwenkt sind. Das zwischen den Gestängeschenkeln 8 und 9 vorgesehene Gelenk definiert dabei eine in Schließstellung horizontale Klappachse 15 für die jeweilige Klappgestänge-Baugruppe 3, 4, so daß das Verdeck 1 bzw. die vorderen Bauteile des Verdecks 1 in an sich bekannter Art nach hinten bzw. vorn klappbar sind (Fig. 3) und in die heckseitige Aufbewahrungslage verlagerbar bzw. aus dieser rückführbar sind.

Bei dem erfindungsgemäß ausgebildeten Verdeck 1 sind im Bereich der Gelenk-Achsen 12, 13 und/oder 15 der Gestängeschenkel 8, 9, 10, 11 jeweilige Spreizelemente 16, 17 vorgesehen, mittels der die Gestängeschenkel 8, 9 auf ihrer Bewegungsbahn A (Fig. 3) zur gemeinsamen heckseitigen Aufbewahrungslage (Fig. 6) hin bereits auf einem Bahnbereich A' oberhalb des Fondbereiches F des Fahrzeugs eine nach außen gerichtete Querverschwenkung ausführen, die beim Schließvorgang des Verdecks 1 mit umgekehrter Bewegungsrichtung ausgeführt wird.

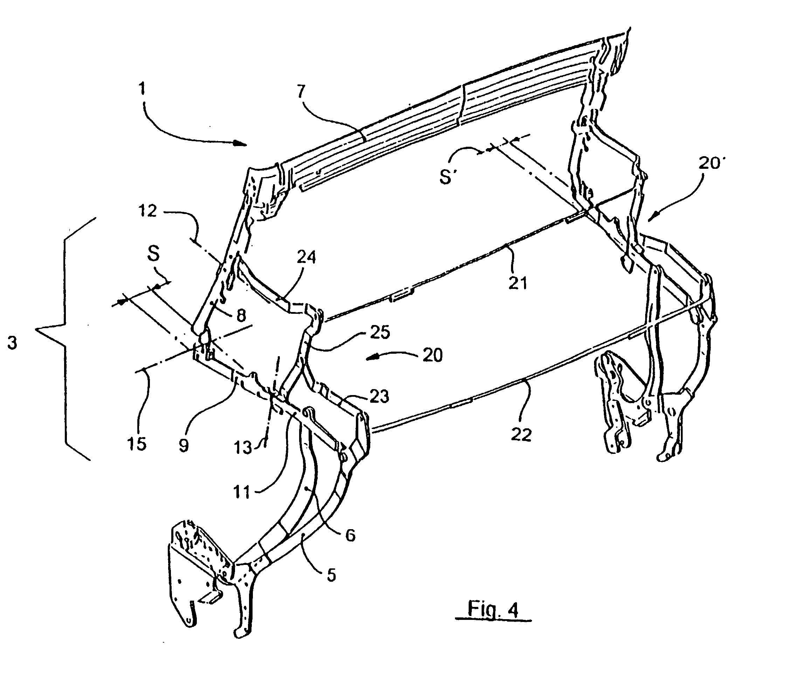

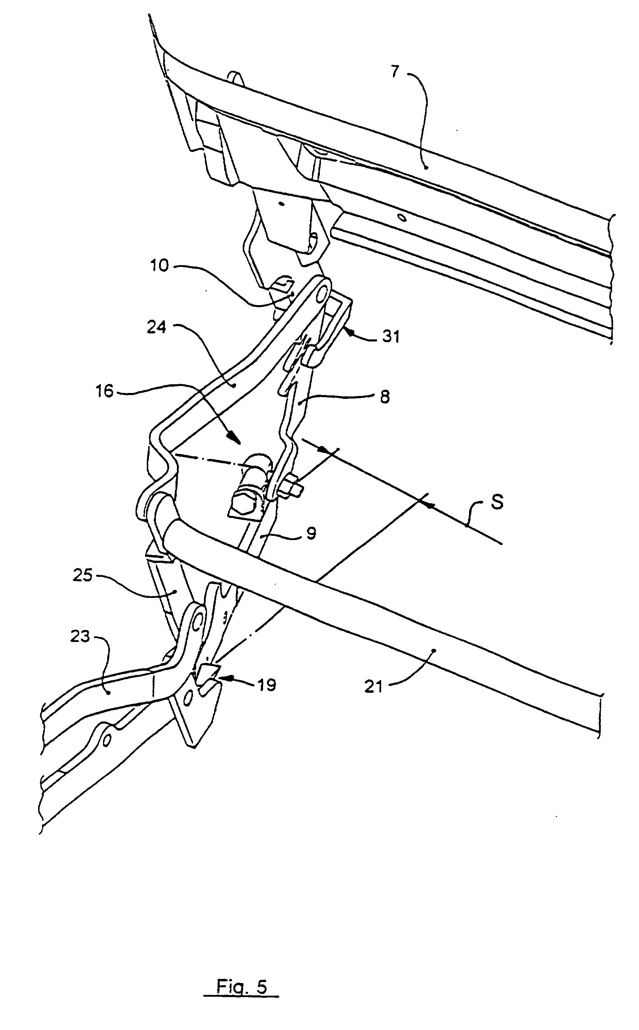

Die Zusammenschau der Bewegungsphasen gemäß Fig. 3 bis 5 verdeutlicht dabei, daß die mit einem Pfeil S, S' dargestellte Querverstellung (Fig. 4) der Bauteile insbesondere bereits dann erreicht ist, wenn das Verdeck 1 bis in einen kopfnahen Bereich eines Passagiers P (Fig. 3) hochgeschwenkt ist. Damit weisen die Klappgestänge-Baugruppen 3, 4 eine über den Schwenkweg zunehmende und beim Erreichen der Ablagestellung als vergrößerte Schulterbreite wirksame Spreiz-Weite W (Fig. 7) auf, mit der für den Bereich des Fahrzeuginnenraumes insbesondere eine Komfortverbesserung dann erreicht ist, wenn bei im Fahrzeug befindlichen Passagieren P das Verdeck 1 in Offenfahrstellung verlagert bzw. ein Schließvorgang eingeleitet wird.

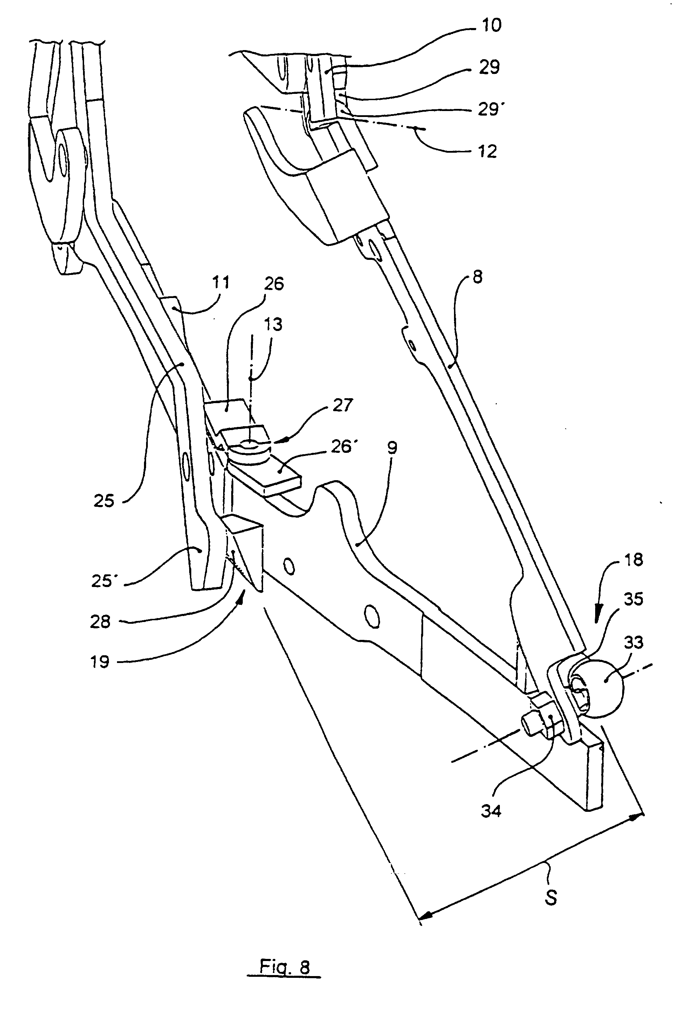

Die Spreizelemente 16, 17 sind in die Klappgestänge-Baugruppen 3, 4 bzw. in den Bereich der beiden mittleren Gestängeschenkel 8, 9 so integriert, daß zwischen den Bauteilen in raumsparend dichter Anordnung eine Zwangssteuerung gebildet ist, wobei diese in vorteilhaft einfacher Ausführung im Bereich der Klappachse 15 als das Spreizelement 16 ein Kugelgelenkteil 18 aufweist und der zugeordnete Gestängeschenkel 9 zum hinteren Stützschenkel 11 hin innenseitig mit einem Führungskeil 19 als das Spreizelement 17 zusammenwirkt (Fig. 6, Fig. 8). In Öffnungsstellung (Fig. 6) können die Achsen 12 und 13 in nicht fluchtender Übereinanderlage positioniert sein, so daß diese einen Abstand X aufweisen.

Die Klappgestänge-Baugruppen 3, 4 weisen eine über die Hauptsäule 5 und die Hauptführungsstange 6 mit den Gestängeschenkeln 8, 9, 10, 11 zusammenwirkende Führungsstreben-Konstruktion 20, 20' auf, wobei diese in Fahrzeugquerrichtung über jeweilige Spriegel 21, 22 verbunden sind. Die Führungsstreben-Konstruktion 20 ist mit einer endseitig an der Hauptsäule 5 angelenkten Verbindungsstrebe 23 versehen, die anderenends mit zwei vorderen Strebenteilen 24, 25 verbunden ist. Diese Strebenteile 24 und 25 übergreifen die beiden mittleren Gestängeschenkel 8, 9 und bilden mit diesen ein Schwenk-Parallelogramm (Fig. 3). Das Strebenteil 24 ist dabei im Nahbereich der Achse 12 am vorderen Stützschenkel 10 gelenkig abgestützt und das Strebenteil 25 ist im Nahbereich der Achse 13 dem hinteren Stützschenkel 11 gelenkig zugeordnet.

In Fig. 8 verdeutlicht eine ausschnittsweise Innenansicht im Bereich der Gestängeschenkel 8, 9 das Kugelgelenkteil 18 und den Führungskeil 19. Im Bereich der Gelenkachse 13 ist dabei ein Scharnierteil 27 vorgesehen, das mit einem oberseitigen Verbinder 26 mit dem hinteren Gestängeschenkel 11 und mit einem unterseitigen Verbinder 26' mit dem Gestängeschenkel 9 verbunden ist. Das Strebenteil 25 gelangt mit einem Stützende 25' bei der Verdeckbewegung am Führungskeil 19 in Abstützungseingriff, so daß das Strebenteil 25 dem Gestängeschenkel 9 über eine Druckeinleitung an einer Keilfläche 28 die Querverstellung vermittelt. Diese Querverstellung wird im Bereich des Kugelgelenkteiles 18 in einem am Gestängeschenkel 9 abgestützten Kugelkopf 33 aufgenommen und zwangsgesteuert über einen mittels Verbindungsteile 34 angelenkten Innenkugelteil 35 endseitig auf den Gestängeschenkel 8 übertragen, wobei dieser andererseits im Bereich des Stützschenkels 10 bzw. der Gelenkachse 12 nach außen schwenkt und diese Schwenkbewegung über Gelenkverbindungsteile 29, 29' aufgenommen ist. In Öffnungsstellung (Fig. 6) liegt die Keilfläche 28 am Stützende 25 des Strebenteils 25 so an, daß die Spreizstellung stabilisiert ist.

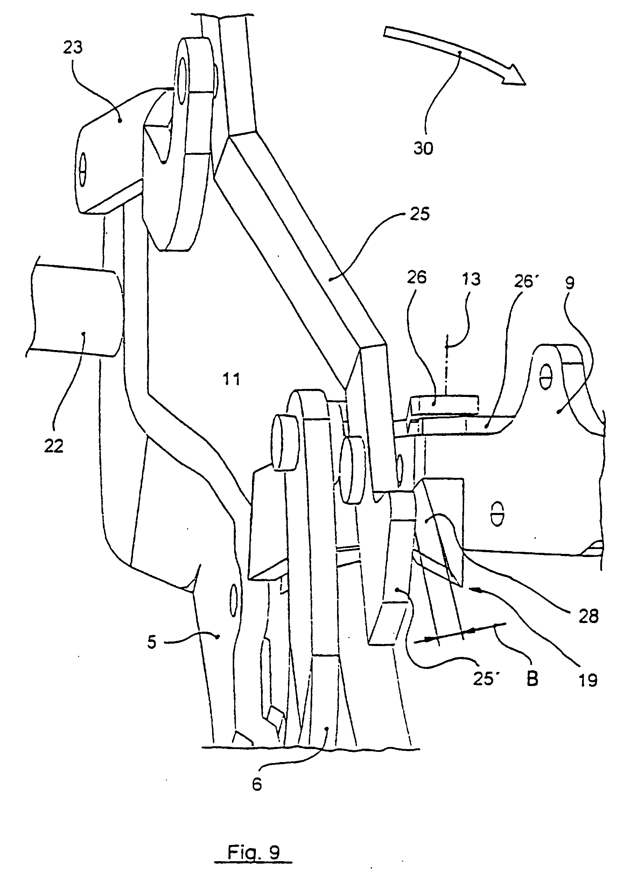

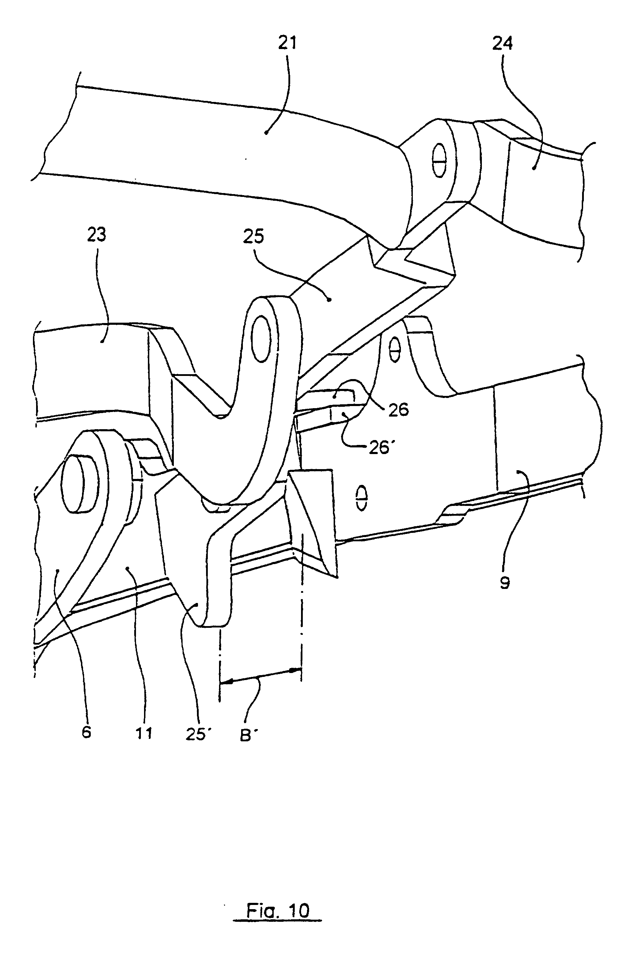

In Fig. 9 ist mit einem Pfeil 30 die Bewegung der Bauteile im Bereich des Führungskeils 19 bei weiterer Schließbewegung des Verdecks 1 veranschaulicht. Der Verbindungseingriff von Führungskeil 19 und Stützende 25' ist in dieser Schwenkphase bereits gelöst (Abstand B) und beim weiteren Einlaufen des Verdecks 1 in die Schließphase gemäß Fig. 10 ist zwischen dem Stützende 25' und dem Führungskeil 19 ein Freiraum (Abstand B') gebildet.

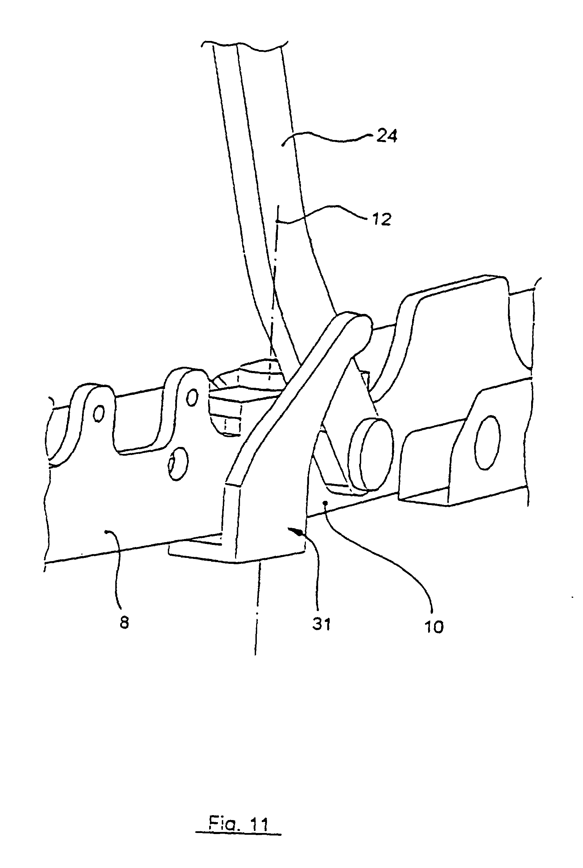

In Fig. 11 ist der Verbindungsbereich von Stützschenkel 10 und Gestängeschenkel 8 im Nahbereich der Achse 12 dargestellt, wobei ein als Einführhilfe für die Führungsstreben-Konstruktion 20, 20' bzw. dessen Strebenteil 24 vorgesehenes Anlagewinkelteil 31 deutlich wird, mit dem die Querstabilität des Verdecks 1 verbessert ist.

Das in Fig. 1 dargestellte Verdeck 1 weist in seiner Schließstellung einen Anlenkpunkt 32 der Hauptsäule 5 auf, der eine 0°-Stellung des Verdeckes 1 definiert. Bei Einleitung einer Öffnungsbewegung mittels der Hauptsäule 5 führt diese eine Schwenkbewegung in einer Pfeilrichtung K aus, so daß in deren 50°-Stellung die Gestängeschenkel 8, 9, 10, 11 soweit nach hinten bewegt sind, daß an den beiden mittleren Gestängeschenkeln 8, 9 die vorbeschriebene Querverstellung beginnt und diese Querverstellung bereits ihren Maximalwert (Weite W) nach Erreichen einer 80°-Stellung der Hauptsäule 5 erreicht hat. In der Ablagestellung des Verdecks 1 weist die Hauptsäule 5 danach eine 123°-Stellung auf.

Dieser vorbeschriebene Winkelbereich des Beginns der Querverschwenkung der Gestängebauteile 8 und 9 kann durch die konstruktive Ausgestaltung des Führungskeiles 18 und die Anordnung des Anlagewinkelteiles 31 so verändert werden, daß beispielsweise entsprechend der Bauteillänge im Bereich der Gestängeschenkel 8, 9, 10, 11 für unterschiedliche Fahrzeugtypen jeweils optimale Bereiche der Querverstellung erreicht werden. Die Einbaulage des jeweiligen Führungskeils 19 und des Anlagewinkelteils 31 sind dabei in vorteilhafter Ausbildung so gewählt, daß ein Blockieren auf der Bewegungsbahn der Teile in jedem Falle ausgeschlossen ist und über eine einstellbare Leichtgängigkeit die Bauteile vor Überbelastungen geschützt sind.

## Patentansprüche

1. Verdeck für ein Cabriolet-Fahrzeug mit zwei der Dachhaut an beiden Seitenrändern jeweils zugeordneten und symmetrisch zur Fahrzeuglängsmittelebene (2) verlaufenden Klappgestänge-Baugruppen (3, 4), mittels deren heckseitig abgestützter Hauptsäule (5) und Hauptführungsstange (6) ein in Schließstellung am Frontscheibenrahmen anliegendes Dachspitzenteil (7) gemeinsam mit dieses abstützenden Gestängeschenkeln (8, 9, 10, 11) in eine heckseitige Aufbewahrungslage überführbar ist, wobei zumindest zwei der Gestängeschenkel (8, 9) um vertikale Achsen (12, 13) nach außen schwenken, **dadurch gekennzeichnet, daß** die Gelenke der Gestängeschenkel (8, 9, 10, 11) mit Spreizelementen (16, 17) versehen sind, derart, daß die Gestängeschenkel (8, 9) auf ihrer Bewegungsbahn (A) in die gemeinsame heckseitige Aufbewahrungslage bereits oberhalb des Fondbereichs (F) des Fahrzeugs eine nach außen gerichtete Querverschwenkung (S, S') ausführen.

2. Verdeck nach Anspruch 1, **dadurch gekennzeichnet, daß** jede Klappgestänge-Baugruppe vier Gestängeschenkel (8, 9, 10, 11) aufweist, wobei ein hinterer Stützschenkel (11) mit der Hauptsäule (5) verbunden ist, ein vorderer Stützschenkel (10) am Dachspitzenteil (7) angreift sowie die beiden mittleren Gestängeschenkel (8, 9) im Bereich eines Klappgelenkes (15) verbunden sind und mit den Spreizelementen (16, 17) eine Zwangssteuerung bilden.

3. Verdeck nach Anspruch 1 oder 2, **dadurch gekennzeichnet, daß** die beiden mittleren Gestängeschenkel (8, 9) einerseits ein zwischen diesen befindliches Kugelgelenkteil (18) als Spreizelement (17) aufweisen und andererseits einer der Gestängeschenkel (9) mit einem Führungskeil (19) als Spreizelement (16) versehen ist.

4. Verdeck nach einem der Ansprüche 1 bis 3, **dadurch gekennzeichnet, daß** die Klappgestänge-Baugruppe (3, 4) eine mit der Hauptsäule (5) und der Hauptführungsstange (6) zusammenwirkende Führungsstreben-Konstruktion (20, 20') aufweist, deren zwei vordere Strebenteile (24, 25) mit den beiden mittleren Gestängeschenkeln (8, 9) ein Schwenk-Prallelogramm bilden.

5. Verdeck nach einem der Ansprüche 1 bis 4, **dadurch gekennzeichnet, daß** der vom Bereich des Kugelgelenkes (18) zum Dachspitzenteil (7) gerichtete mittlere Gestängeschenkel (8) an seinem vorderen Ende einen bei Bewegung des Verdecks (1) als Einführhilfe für die Führungsstreben-Konstruktion (20, 20') wirksamen Anlagewinkelteil (31) aufweist.

## Claims

1. Top for a convertible car with two folding linkage assemblies (3, 4) running symmetrically to the car's longitudinal centreline (2), and allocated to the roof skin on both lateral edges, by means of whose main pillar (5), supported on the rear side, and main guide rail (6), a roof top section (7) which in the closed position rests on the windscreen frame can be transferred jointly with the linkage arms (8, 9, 10, 11) which support it to a rearward stowage position, whereby at least two of the linkage arms (8, 9) pivot outwards about vertical axes (12, 13), **characterised in that** the hinges of linkage arms (8, 9, 10, 11) are equipped with spread components (16, 17) such that linkage arms (8, 9) in their trajectory (A) perform an outwardly directed transverse pivotal motion (S, S') to a common rearward stowage position above the back seat area of the car.

2. Top according to claim 1, **characterised in that** each folding linkage assembly exhibits four hinge arms (8, 9, 10, 11) whereby a rear support arm (11) is connected with the main pillar (5), a front supporting arm (10) engages in the roof top section (7) and the two middle linkage arms (8, 9) are connected in the area of a folding hinge (15) and configure a mechanical control in conjunction with spreader components (16, 17).

3. Top according to claim 1 or 2, **characterised in that** the two middle linkage arms (8, 9) on the one hand exhibit a ball-joint section (18) which is located between them as a spreader component and on the other hand that one of the linkage arms (9) is equipped with a guide shim (19) as a spreader component (16).

4. Top according to one of claims 1 to 3, **characterised in that** folding linkage assembly (3, 4) exhibits a guide strut structure (20, 20') which interacts with main pillar (5) and main guide rail (6) whose two front strut sections (24, 25) form a pivoting parallelogram in conjunction with the two middle linkage arms (8, 9).

5. Top according to one of claims 1 to 4, **characterised in that** the middle linkage arm (8) which is aligned from the area of ball joint (18) towards roof top section (7) exhibits on its front end a contact bracket (31) which upon movement of top (1) acts as an aid for insertion of guide strut structure (20, 20').

## Revendications

1. Capote pour un véhicule convertible, comportant deux ensembles (3, 4) de tringlerie basculante associés chacun à un bord latéral de la peau de toit, symétriques par rapport au plan longitudinal médian (2) du véhicule et comportant chacun, en appui vers l'arrière du véhicule, une colonne principale (5) et une tige de guidage principale (6) qui avec des branches de tringlerie (8, 9, 10, 11 ) soutenant une partie de pointe de toit (7) appliquée en position de fermeture sur le cadre de pare-brise, peuvent faire passer cette partie (7) en position de stockage située vers l'arrière, au moins deux des branches de tringlerie (8, 9) pivotant vers l'intérieur autour d'axes verticaux (12, 13),
**caractérisée en ce que**
les articulations des branches de tringlerie (8, 9, 10, 11) sont équipées d'éléments d'élargissement (16, 17) de manière que les branches (8, 9) sur leur trajectoire (A) les amenant à la position commune de stockage en arrière exécutent déjà au-dessus de la zone arrière (F) de l'habitacle du véhicule, un décalage transversal (S, S') vers l'extérieur.

2. Capote selon la revendication 1,
**caractérisée en ce que**
chaque ensemble de tringlerie basculante comprend quatre branches de tringlerie (8, 9, 10, 11), à savoir une branche postérieure d'appui (11) reliée à la colonne principale (5), une branche antérieure d'appui (10) en prise avec la partie de point de toit (7), les deux branches médianes (8, 9) étant reliées entre elles dans la zone d'une articulation de basculement (15) et formant avec les éléments d'écartement (16, 17) une commande forcée.

3. Capote selon la revendication 1 ou 2,
**caractérisée en ce que**
les deux branches médianes de tringlerie (8, 9) présentent d'une part, située entre ces branches et jouant le rôle d'élément d'élargissement (17), une partie d'articulation à rotule (18), d'autre part sur l'une d'elles (9), un coin de guidage (19) jouant le rôle d'élément d'élargissement (16).

4. Capote selon l'une quelconque des revendications 1 à 3,
**caractérisé en ce que**
l'ensemble de tringlerie basculante (3, 4) comprend un groupe de barres de guidage (20, 20') coopérant avec la colonne principale (5) et la tige principale de commande (6) et dont les barres antérieures (24, 25) forment avec les deux branches médianes de tringlerie (8, 9) un parallélogramme articulé.

5. Capote selon l'une quelconque des revendications 1 à 4,
**caractérisée en ce que**
la branche médiane de tringlerie (8) allant de la zone de l'articulation à rotule (18) à la partie de pointe de toit (7) présente à son extrémité avant une cornière d'appui (31), intervenant pendant le déplacement de la capote (1), comme assistance à l'engagement du groupe de barres de guidage (20, 20').
